(19) Europäisches Patentamt
European Patent Office
Office européen des brevets

(11) **EP 2 328 251 A2**

(12) **EUROPEAN PATENT APPLICATION**

(43) Date of publication:
**01.06.2011 Bulletin 2011/22**

(51) Int Cl.:
***H02J 3/08*** *(2006.01)*

(21) Application number: **10193093.1**

(22) Date of filing: **30.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.11.2009 US 627472**

(71) Applicant: **Rockwell Automation Technologies,
Inc.
Mayfield Heights, OH 44124 (US)**

(72) Inventors:
• **Kerkman, Russel J.**
**Milwaukee, WI 53220 (US)**
• **Rodriguez-Valdez, Carlos Daniel**
**Glendale, WI 53209 (US)**

(74) Representative: **Grünecker, Kinkeldey,
Stockmair & Schwanhäusser
Anwaltssozietät
Leopoldstrasse 4
80802 München (DE)**

(54) **A phase lock loop with tracking filter for synchronizing an electric grid**

(57)    Methods and systems for synchronizing an electric grid having unbalanced voltages are provided. Voltage vectors may be synchronized in a phase-locked-loop configured to maintain synchronous operation of the grid even when the voltages are unbalanced. For example, a phase-locked-(oop may be coupled to one or more tracking filters designed to estimate a disturbance in an error signal of the voltages. The estimated disturbance (s) may be removed from the error signal before the phase lock loop determines an estimate of the grid frequency. Thus, adverse affects of voltage unbalance, such as abnormal current behavior, may be mitigated.

FIG. 1

**Description**

BACKGROUND

The invention relates generally to electrical networks, and more specifically, to methods of synchronizing input signals into the electrical networks.

Electric devices may be connected or organized in a network to enable the transmission of power to the devices, or communication between the devices. Such a network of interconnected devices may be described as a grid. For example, an electric grid may be an interconnected network for delivering electricity from one or more power generators to the connected devices (e.g., customers of the utility company). A power grid may transmit AC power at a synchronized frequency, amplitude, and/or phase angle to efficiently connect a large number of power generators and devices. Synchronized operation of a grid, or portions of a grid, may enable a pooling of power generation, as well as a pooling of loads to result in lower operating costs.

Though transmitting synchronized AC power may be beneficial to the efficient transmission and/or distribution of power, many factors may disturb the synchronization of a grid. For example, main disturbances may include voltage imbalances, angular frequency variations, and voltage harmonic distortions. In particular, voltage imbalances may be common in a power grid, as single phase loads of a grid may not be evenly distributed between the phases of the supplied power, and may be continuously connected and disconnected. Furthermore, the configuration of a typical power system may be inherently asymmetrical.

The American National Standards Institute (ANSI) recommends no more than 3% imbalance when a power generator is operating on no load. However, any discrepancies in the amplitudes, frequencies, and/or phase angles between two parallel voltages may cause abnormal current circulation within the grid. In some power grids, even a small voltage imbalance may result in a large current imbalance. Imbalanced currents may stress grid devices, such as AC-DC converters, cycloconverters, active filters, induction motors, and other energy storage systems which function to convert and/or transfer power through the grid to the connected electric devices. Imbalanced current may also stress grid link inductors and capacitors, and imbalanced current in one end device of a grid may introduce a torque ripple through the grid. Methods of decreasing the effects of voltage and/or imbalance may improve the performance and synchronous operation of a grid.

BRIEF DESCRIPTION

One embodiment relates to a method for synchronizing to an electric grid. The method includes receiving the phase voltages of the grid and determining a disturbance frequency in the phase voltage using one or more tracking filters. The method further includes removing the disturbance frequency to produce clean phase voltages, and performing a phase-locked-loop operation on the clean phase voltage to determine a phase angle of the phase voltage of the grid.

Another embodiment relates to a phase-locked-loop including circuitry and a tracking filter. The circuitry is configured to receive one or more input voltage vectors from an electric grid and determine the phase angle and frequency of the electric grid voltage. The tracking filter may determine a frequency of the disturbance in the electric grid voltage, which may be contributing to voltage imbalance in the grid. In one embodiment, the tracking filter may also remove the frequency of the disturbance. The circuitry may then use the grid voltage with removed disturbance frequency to determine a phase angle of the grid voltage.

In another implementation, a phase angle generator is presented. The phase angle generator may include a phase-locked-loop configured to receive an electric grid voltage and determine a phase angle and/or frequency of the voltage. The phase angle generator may also include a tracking filter configured to estimate a disturbance frequency in the electric grid voltage, and may remove the disturbance frequency. The phase-locked-loop may output a phase angle of the electric grid voltage to synchronize to the electric grid.

DRAWINGS

These and other features, aspects, and advantages of the present invention will become better understood when the following detailed description is read with reference to the accompanying drawings in which like characters represent like parts throughout the drawings, wherein:

FIG. 1 is a block diagram illustrating a typical industrial power grid, in accordance with one embodiment of the present techniques;

FIG. 2 is a block diagram representing how a phase-locked-loop may estimate a phase angle of an electric grid voltage;

FIG. 3 is a block diagram representing a phase-locked-loop configured to output a synchronized voltage when the voltage inputs are unbalanced;

FIGS. 4A and 4B are graphs depicting current unbalance in an electric grid current having three phases;

FIG. 5 is a graph depicting a reference frequency, a frequency estimate output from a phase-locked-loop with no disturbance tracking, and a frequency estimate output from a phase-locked-loop with disturbance tracking when the electric grid voltages are unbalanced; and

FIG. 6 is a graph depicting a reference frequency, and a frequency estimate output from a phase-locked-loop with disturbance tracking and removal, when the electric grid voltages are unbalanced.

DETAILED DESCRIPTION

A grid may refer to a network of loads (e.g., motors, end devices, etc.) which may be interconnected to enable communication between the loads and/or the transmission of power to the loads. One example of a grid is a power grid, which may be a network of power generators, distributers, and customers. One or more power plants may generate power, which may be converted and distributed to customers of the utility company. On a smaller scale, an industrial grid may be another example of a grid, where power generators may generate power to be distributed to various motors or other devices powered via the grid.

An electric grid (e.g., a power grid or an industrial grid) may include alternating current (AC) power sources operating in parallel. Power generated and distributed by various sources (e.g., a power plant, a generator, etc.) may be synchronized in frequency, amplitude, and/or phase angle. Synchronization of AC power may result in the efficient transmission and/or distribution of power. However, disturbances such as voltage imbalance, angular frequency variations, and/or voltage harmonic distortion may disrupt the synchronization of AC power transmission. In particular, voltage imbalance may be common in a power grid, as single phase loads of a grid may not be evenly distributed between the phases of the supplied power, and may be continuously connected and disconnected. Furthermore, the configuration of a typical power system may be inherently asymmetrical.

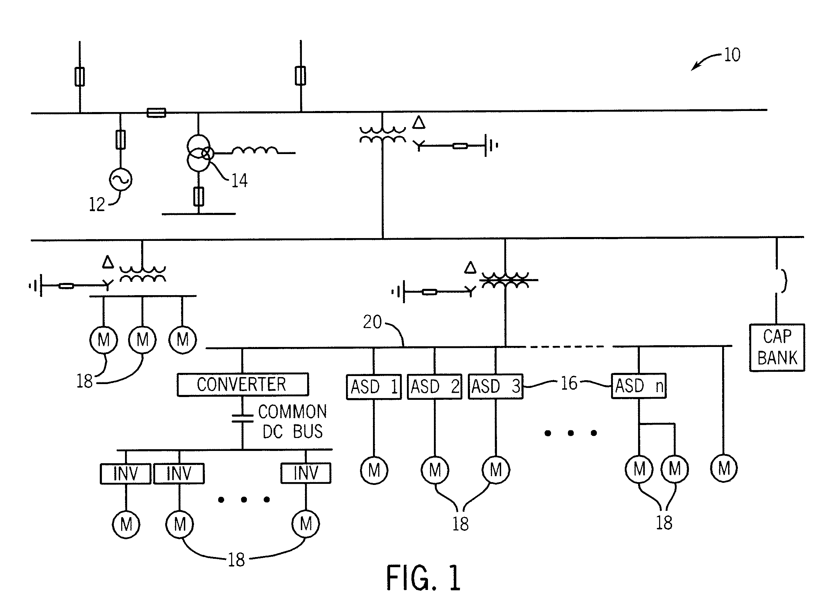

One example of an electric grid 10 may be illustrated in FIG. 1, where a generator 12 may deliver power through the grid 10 to the motors 18 of different devices. Typically, an electric grid 10 may operate with a three-phase AC power source. Thus, the grid 10 may include a three-phase transformer 14, which may control the values of the three-phase voltage used in a typical power-delivering grid. Further, as each device may operate on different speeds, the grid 10 may also include adjustable speed drives (ASDs) 16 configured to adjust the operating speed of the motors 18 for each device.

A typical electric grid may not be symmetrical, as the loads (e.g., the devices connected to the motors 18) may not be evenly distributed between phases. The connection or disconnection of any motor 18 may also affect the three-phase signals distributed by the generator 12 and the three-phase transformer 14. Furthermore, voltage imbalance at one motor 18 may affect the synchronization of other motors 18 coupled to the unbalanced motor 18. For example, at the point of common coupling 20, voltage imbalance at a motor 18 coupled to ASD1 may also result in voltage imbalance at a motor 18 coupled to ASD2 or ASD3, as there is no impedance between the motors 18 to prevent the voltage imbalance from propagating through commonly coupled motors 18 of the grid 10. As discussed, such imbalance (i.e., discrepancies in the amplitudes, frequencies, and/or phase angles) of the two coupled voltages may cause a large current imbalance, which may damage both systems.

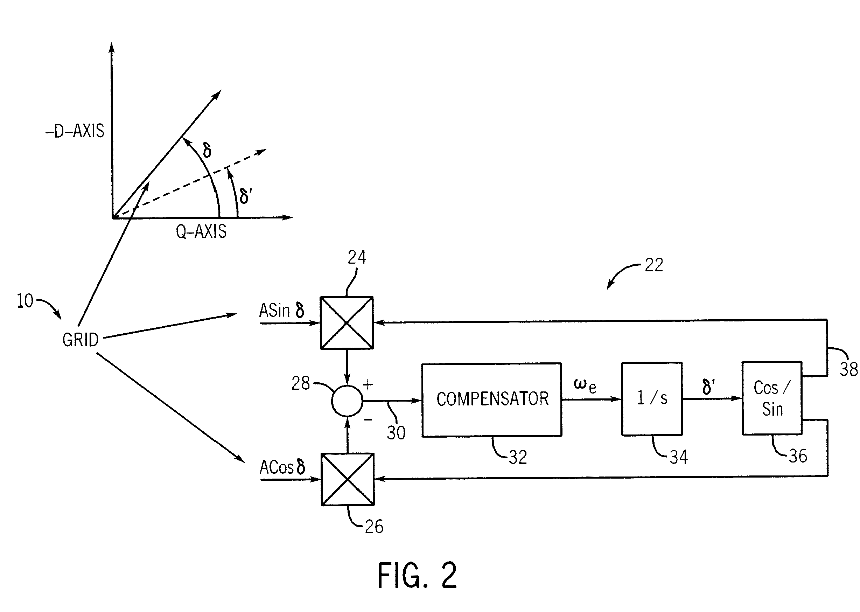

Typically, a phase-locked loop (PLL) technique may be used to control phase synchronization of the grid by regulating to zero the difference between the PLL output $\delta'$ and the phase $\delta$ of the two measured inputs A sin $\delta$ and A cos $\delta$. One example of a synchronization technique using a PLL 22 may be illustrated in FIG. 2. While a grid typically supplies voltage in three phases, these three phases may be depicted as a two-phase equivalent for the example of FIG. 2. The three-phase voltages may be balanced 120° out of phase with each other. The two phase voltage inputs may be sinusoidal waveforms which are 90° out of phase, rotating in steady state, and at the frequency of the grid voltage.

The instantaneous angular position $\delta$ of the equivalent vector to the phase voltages 10 may be regulated to a feedback loop which ideally regulates the voltage in the d-axis ($V_d$ 30), or the sum of the inputs via adder 28, to the value of the reference signal frequency (e.g., zero in this case). Alternatively, in some embodiments, the feedback loop may regulate the voltage in the q-axis to a reference value of one if a per-unit value is considered. Using the d-axis regulation as an example, the detected d-component of the voltage vector $V_d$ 30 may also be referred to as an error signal. $V_d$ 30 may be transmitted to a compensator 32 which determines a frequency estimate $\omega'_e$ of the grid voltage. The frequency estimate $\omega'_e$ may then be integrated by an integrator 34 to determine a phase angle estimate $\delta'$ of the grid voltage. The phase angle $\delta'$ may be used by another transformation 36 to output a sinusoid and a cosinusoid 38, which may be fed back and multiplied with the original inputs A sin $\delta$ and A cos $\delta$ (which is depicted as having an amplitude of 1 after normalization of the gain 68) to generate, when subtracted, a new error signal $V_d$ 30.

Ideally, when harmonic distortion or voltage imbalance is not present, a high bandwidth PLL may detect the phase angle and amplitude of the voltage vector to maintain grid synchronization. When harmonic distortion is present (e.g., the voltage is distorted with high-order harmonics), the bandwidth of the PLL may be reduced to reject and eliminate the effect of the harmonics on the output. However, bandwidth reduction may not eliminate imbalanced grid voltages.

Thus, as previously discussed, the voltage imbalance may cause abnormal current conditions which may damage the power source and/or devices connected to the power grid.

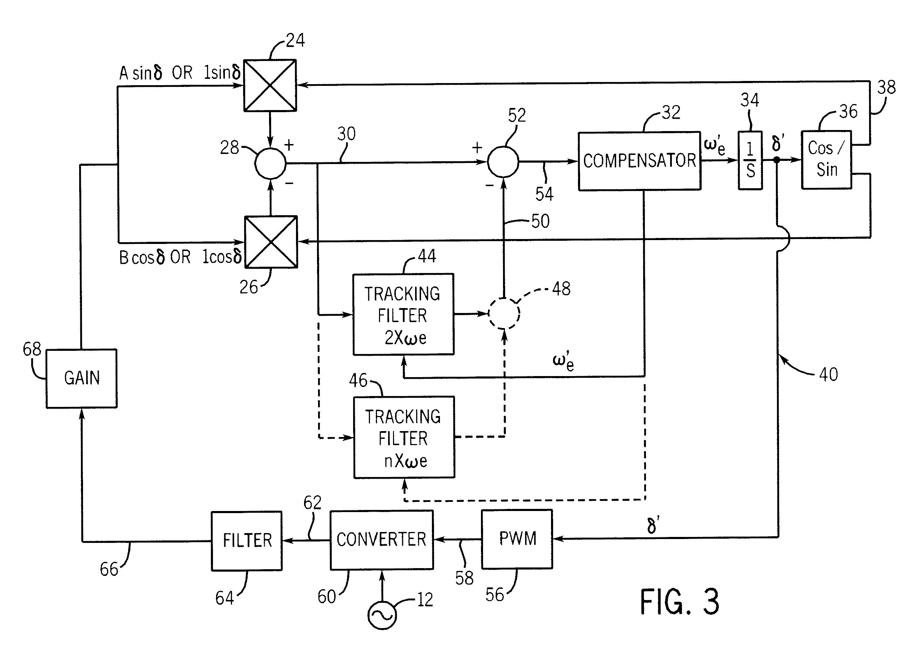

One embodiment of the present techniques of using a phase lock loop configured to determine a phase angle of the grid voltage, to compensate for phase imbalance, and synchronize to the grid may be depicted in the block diagram 40 of FIG. 3. The phase lock loop may have imbalanced inputs, which may be imbalanced in the phase and/or amplitude. For example, the phase lock loop 40 may have imbalanced inputs, as depicted by the voltage vectors A sin $\delta$ and B cos $\delta$ having different voltage amplitudes A and B. As will be discussed, the normalization of the coefficients for A sin $\delta$ and B cos $\delta$ by the gain 68 may result in the magnitude being 1. The two inputs A sin $\delta$ and B cos $\delta$ may be transformed by the multipliers 24 and 28 to obtain $V_d$ 30, or an estimate of the imbalance in the voltage vectors of the grid 10.

The phase lock loop 40, which may be configured for imbalanced voltage inputs, may transmit $V_d$ 30 to one or more tracking filters 44 and 46. When the grid 10 is balanced, $V_d$ 30 may be direct current (DC). When the grid 10 is imbalanced, the $V_d$ 30 may be a non-DC signal with a complex frequency spectrum, having a dominant second harmonic of the grid 10. The tracking filter 44 may be configured to determine the disturbance 50 in $V_d$ 30, which may represent twice the fundamental frequency of the error signal $V_d$ 30, or the voltage imbalance in the input signals A sin $\delta$ and B cos $\delta$. Determining the disturbance 50 may be based on inputs into the tracking filters 44 and 46 from the compensator 32, which outputs a frequency estimate $\omega'_e$ of the grid voltage. The output of the tracking filter 44 may be an estimate of twice the fundamental frequency of $V_d$ 30. In one embodiment, the tracking filter 44 may include hardware, software, or a combination of both, which tracks a frequency of a sinusoidal reference ($V_d$ 30 here) based on a current and a time-delayed sample of the frequency estimate $\omega'_e$ (input from the compensator 32), and based on the relationship below:

$$\begin{bmatrix} x_1(KT) \\ x_2(KT) \end{bmatrix} = \mathbf{A} \begin{bmatrix} x_1(K-1)T \\ x_2(K-1)T \end{bmatrix} + \mathbf{B} \left[ u(KT) + u(K-1)T \right] \qquad \text{eq. (1)}$$

where K represents a current sample, T represents the sampling time, $x_1(KT)$ represents the current estimate of the frequency of the error signal $V_d$ 30, and $x_1(K-1)T$ represents a previous estimate of the frequency of the error signal $V_d$ 30. The relationship $u(KT) + u(K-I)T$ may be obtained by adding a time delayed sample of the synchronized frequency estimate $\omega_e$ input from the compensator 32. Matrix $\mathbf{A}$ may be a 2x2 matrix, and matrix $\mathbf{B}$ may be a 2x 1 matrix, both defined below:

$$\mathbf{A} = \frac{1}{1 + \frac{T}{2}a + \left(\frac{T}{2}\omega_0(KT)\right)^2} \begin{bmatrix} 1 & -\frac{T}{2}\omega_0(KT) \\ \frac{T}{2}\omega_0(KT) & 1 + \frac{T}{2}a \end{bmatrix} \begin{bmatrix} 1 - \frac{T}{2}a & -\frac{T}{2}\omega_0(K-1)T \\ \frac{T}{2}\omega_0(K-1)T & 1 \end{bmatrix}$$

$$\text{eq. (3)}$$

$$\mathbf{B} = \frac{1}{1 + \frac{2}{aT} + \frac{T}{2a}\left(\omega_0(KT)\right)^2} \begin{bmatrix} 1 \\ \frac{T}{2}\omega_0(KT) \end{bmatrix} \qquad \text{eq. (4)}$$

A phase lock loop 40 of the present techniques may also include another tracking filter 46 for tracking any other frequency component which may be in $V_d$ 30 and contributing to voltage imbalance. For example, the tracking filter 46 may be tunable, as depicted by the $nX\omega_e$, where n may be set to a value which estimates harmonic disturbances, or the alternate current (AC) component of the signal $V_d$ 30. For example, the PLL may include a tracking filter set to the second harmonic disturbance, a tracking filter set to the third harmonic disturbance, etc. The outputs of the tracking filters 44 and 46, which may include the frequency estimate of the error signal $V_d$ 30, and/or any other disturbance contributing to voltage imbalance (e.g., the third harmonic, the fifth harmonic, the DC component, etc.), and may be added in the adder 48 to generate the disturbance 50. As embodiments may have one or more tracking filters (e.g., tracking filter 40 and/or 46), the second tracking filter 46 and the adder 48 are represented by dotted lines.

The tracked disturbance 50 may be subtracted from the signal $V_d$ 30 at the adder-subtractor 52, such that a "clean" voltage signal 54 may be transmitted to the compensator 32. Thus, the clean signal 54 may be a signal $V_d$ 30 where the tracked disturbances 50 have been removed (e.g., subtracted at the adder-subtractor 52). The compensator 32 may include a system of amplifiers and integrators which may determine a phase angle $\delta'$ based on the frequency estimate $\omega'_e$ of the grid voltage. For example, the integrator 34 may output the phase angle $\delta'$, which may be an estimate of the phase angle $\delta$ of the grid 10. Further, as discussed, the compensator 32 may also output the frequency estimate $\omega'_e$ to the tracking filters 44 and 46, such that the tracking filters may apply one or more algorithms to estimate the disturbance 50 based on current and time delayed frequencies estimate $\omega'_e$ of the grid phase voltages. The estimated phase angle $\delta'$ output by the compensator 32 may be transformed by 36 before it is output back to the multipliers 24 and 26 in the PLL 40.

The frequency estimate $\omega'_e$ and/or the phase angle $\delta'$ may also be output back to the grid 10. The frequency estimate $\omega'_e$ may first be modulated by the pulse width modulator 56, and the modulated signal 58, which may be a control signal for the grid 10, may be used by the converter 60, which may be connected to the grid 10, to control the flow of energy in the grid 10. As illustrated, the converter may be connected to a generator 12 (as in FIG. 1) of the grid 10. The transformed measured voltages (e.g., normalized $V_q$ and $V_d$) 62 may be filtered by the filter 64, which may include, for example, a low pass analog filter 64 to filter out any remaining noise components, which may include higher frequency components. The filtered signal 66, which may now be synchronized to the operating frequency of the grid 10, may further be normalized by the gain 68 to complete the phase lock loop 40.

Thus, the PLL 40 of the present techniques may be configured to maintain synchronization with the grid even when voltages are imbalanced. Mitigating the effects of voltage imbalance may enable the grid to operate synchronously, and may also protect devices powered by the grid 10 from the adverse affects of current unbalance. The configuration of embodiments of the present techniques of tracking and/or removing a disturbance is not limited to the configuration illustrated in the PLL 40 of FIG. 3. For example, the compensator 32 may output an estimated phase angle $\delta'$ to devices external to the PLL 40, or the estimated phase angle $\delta'$ may be further processed and/or filtered before it is returned to the grid 10. Further, an integrator may be separate from or coupled to the compensator 32.

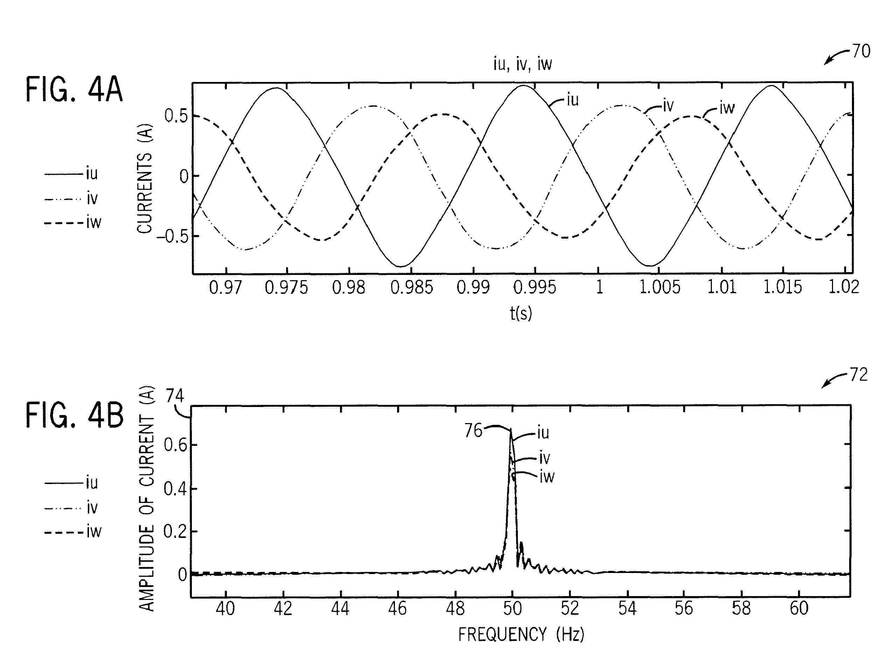

The data corresponding to one example simulation of an effect of one embodiment of the PLL 40 when voltage inputs into the PLL 40 are imbalanced is illustrated in FIGS. 4A - 6. In FIG. 4A, the graph 70 depicts unbalanced input currents. As appreciated, the unbalanced currents may behave similarly to unbalanced voltages for this simulation. The graph 70, shows the three-phases of the current vectors $i_u$, $i_v$, and $i_w$ in the time domain. The graph 72 of FIG. 4B illustrates the magnitude 74 of the three-phases of the current vectors $i_u$, $i_v$, and $i_w$ in the frequency domain. The frequency response of the unbalanced input currents is represented as a spike 76 in the current amplitude of currents $i_u$, $i_v$, and $i_w$, at 50 Hz.

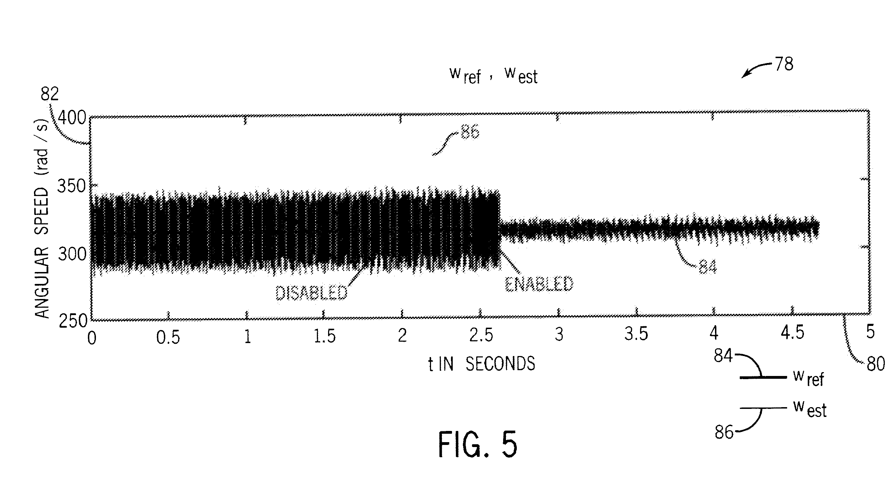

The graph 78 of FIG. 5 may depict the effect of applying a typical PLL and applying the present techniques to synchronize the grid having imbalanced voltages. The graph 78 depicts the angular speed (rad/s) 82 of the reference angular frequency $\omega_{ref}$ 84 (representing the angular frequency of the grid voltage) and the output angular frequency estimate of a PLL $\omega_e$ 86, over time 80. The output angular frequency estimate $\omega_e$ 86, may fluctuate around the reference angular frequency $\omega_{ref}$ 84, which has been set to 314.16 rad/s (50 Hz) in this data. As seen in the graph 78, the output estimate $\omega_e$ 86 may fluctuate substantially in the portion of the graph marked "disabled," which is approximately from 0 to 2.6 seconds. Once a PLL using a tracking filter is enabled, the output estimate $\omega_e$ 86 may fluctuate less, as shown in the portion of the graph marked "enabled," which is approximately from 2.6 to 4.5 seconds. Remaining fluctuations may result from other harmonics which are outside the bandwidth of the tracking filter. Thus, while the output estimate $\omega_e$ 86 of the typical PLL may not be adapted to synchronize to a grid when voltage inputs are unbalanced, using the present techniques, the frequency estimate $\omega_e$ 86 may be substantially closer to the reference angular frequency $\omega_{ref}$ 84.

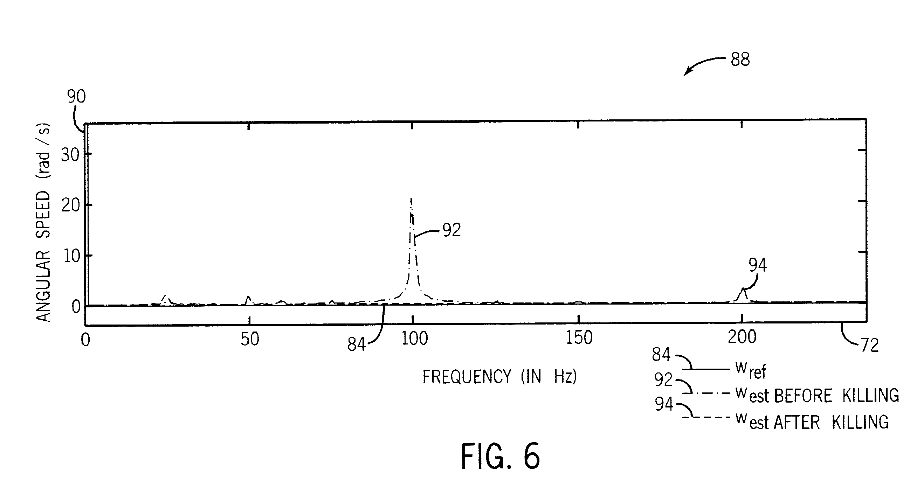

One embodiment of the present techniques, or implementing a tracking filter with the PLL 40 may output an angular frequency estimate $\omega_e$ that is synchronized with the frequency of the grid voltage (reference angular frequency $\omega_{ref}$). The graph 88 of FIG. 6 displays the reference angular frequency $\omega_{ref}$ 84 and the output $\omega_e$, before 92 of a typical PLL, and the output $\omega_e$ after 94 of a PLL 40 adapted to synchronize when voltages are imbalanced. The angular frequencies (rad/s) 90 of $\omega_{ref}$ 84, $\omega_e$, before 92, and $\omega_e$ after 94 are displayed over frequency (Hz) 72. As seen in the graph 88, the output of a typical PLL (before the present techniques are applied) may result in a fluctuation at twice the fundamental frequency of 50 Hz of the second harmonic disturbance (the spike at 100 Hz). However, the output of the PLL 40 after the present tracking techniques are applied are seen in $\omega_e$ after 94, which shows no significant fluctuation at 100 Hz, as the frequencies of the second harmonic disturbance have been removed by tracking and removing the frequency of the disturbance, as seen in one embodiment of the PLL 40 in FIG. 3.

As discussed, the PLL 40 may include any combination or configuration of tracking filters (e.g., tracking filter 44 and tracking filter 46). While the data illustrated in the graphs 70, 78, and 88 in FIGS. 4-6 depict a removal of the second harmonic disturbance, the PLL 40 may include additional tracking filters which track other disturbances. Other tracked disturbances may all be removed in the PLL 40 to compensate for voltage imbalance while synchronizing the grid. Further, while the graphs 70, 78, and 88 display the present techniques in terms of angular frequency 90, it should be noted that determining angular frequency $\omega_e$ and/or a phase angle $\delta'$ may enable a PLL 40 to synchronize a grid when voltage imbalance is present.

While only certain features of the invention have been illustrated and described herein, many modifications and changes will occur to those skilled in the art. It is, therefore, to be understood that the appended claims are intended to cover all such modifications and changes as fall within the true spirit of the invention.

**The following is a list of further preferred embodiments of the invention:**

Embodiment 1: A method for synchronizing an electric grid, comprising:

receiving a phase voltage of the electric grid;

determining a disturbance frequency in the phase voltage via one or more tracking filters;

removing the disturbance frequency within a phase- locked- loop (PLL) to produce a clean frequency; and

performing a PLL operation on the clean frequency to determine a phase angle of the frequency.

Embodiment 2: The method of embodiment 1, comprising outputting the frequency to the electric grid, wherein the phase angle is synchronized with a phase angle of the phase voltage of the electric grid.

Embodiment 3: The method of embodiment 1, wherein the phase voltage comprises a polyphase alternating current source.

Embodiment 4: The method of embodiment 1, wherein the phase voltage comprises a three-phase alternating current source.

Embodiment 5: The method of embodiment 1, the one or more tracking filters comprises one or more of a tracking filter configured to remove a harmonic disturbance, a tracking filter configured to remove a disturbance at twice a fundamental frequency of the phase voltage, and a tracking filter configured to remove a direct current (DC) component of the phase voltage.

Embodiment 6: The method of embodiment 1, wherein the disturbance frequency comprises one or more of a harmonic disturbance, a voltage unbalance, and a DC component of the phase voltage.

Embodiment 7: The method of embodiment 1, wherein performing the PLL operation comprises receiving a feedback of the phase angle of the phase voltage of the electric grid.

Embodiment 8: The method of embodiment 7, wherein performing the PLL operation further comprises:

performing a transformation on the feedback and the phase voltage of the electric grid to generate a transformed value; and

deriving an estimated phase voltage frequency of the electric grid based on the transformed value.

Embodiment 9: The method of embodiment 8, wherein performing the PLL operation further comprises:

deriving an estimated phase angle of the estimated phase voltage frequency of the electric grid based on the transformed value; and

locking on the estimated phase angle.

Embodiment 10: A phase-locked-loop (PLL), comprising:

circuitry configured to receive a voltage of an electric grid, determine a phase angle of the electric grid voltage, and output a voltage having the determined phase angle of the electric grid voltage; and

a tracking filter configured to determine a frequency of a disturbance in the electric grid voltage.

Embodiment 11: The PLL of embodiment 10, wherein the PLL is configured to receive one or more imbalanced voltages of the electric grid.

Embodiment 12: The PLL of embodiment 10, wherein the circuitry comprises a transformation circuit configured to receive the electric grid voltage and the determined phase angle of the electric grid voltage.

Embodiment 13: The PLL of embodiment 10, wherein the circuitry comprises an integrator configured to determine the phase angle of the electric grid voltage based on a frequency of the electric grid voltage.

Embodiment 14: The PLL of embodiment 10, comprising more than one tracking filter.

Embodiment 15: The PLL of embodiment 14, wherein each of the more than one tracking filter is configured to determine one or more of a harmonic disturbance, a DC component, or any other disturbance contributing to a voltage imbalance of the electric grid voltage.

Embodiment 16: The PLL of embodiment 10, comprising circuitry configured to remove the frequency of the disturbance from the electric grid voltage.

Embodiment 17: The PLL of embodiment 10, wherein the electric grid is a three-phase electric grid, and wherein the electric grid voltage comprises three phases.

Embodiment 18: A phase angle generator, comprising:

a phase-locked-loop (PLL) configured to receive an electric grid voltage, generate a phase angle of the electric grid voltage, and output the phase angle of the electric grid voltage based on the electric grid voltage; and

a tracking filter configured to estimate a disturbance frequency in the electric grid voltage and remove the disturbance frequency.

Embodiment 19: The phase angle generator of embodiment 18, wherein the PLL is configured to receive one or more imbalanced electric grid voltages.

Embodiment 20: The phase angle generator of embodiment 18, wherein the tracking filter is configured to estimate one or more disturbance frequencies resulting from one or more of a harmonic distortion or a DC component or a frequency of an error signal generated by the PLL based on the electric grid voltage received.

Embodiment 21: The phase angle generator of embodiment 18, wherein the PLL is configured to output a synchronized voltage to the electric grid.

## Claims

1. A method for synchronizing an electric grid, comprising:

   receiving a phase voltage of the electric grid;
   determining a disturbance frequency in the phase voltage via one or more tracking filters;
   removing the disturbance frequency within a phase-locked-loop (PLL) to produce a clean frequency; and
   performing a PLL operation on the clean frequency to determine a phase angle of the frequency.

2. The method of claim 1, comprising outputting the frequency to the electric grid, wherein the phase angle is synchronized with a phase angle of the phase voltage of the electric grid.

3. The method of claim 1, wherein the phase voltage comprises a polyphase alternating current source, or wherein the phase voltage comprises a three-phase alternating current source.

4. The method of claim 1, the one or more tracking filters comprises one or more of a tracking filter configured to remove a harmonic disturbance, a tracking filter configured to remove a disturbance at twice a fundamental frequency of the phase voltage, and a tracking filter configured to remove a direct current (DC) component of the phase voltage.

5. The method of claim 1, wherein the disturbance frequency comprises one or more of a harmonic disturbance, a voltage unbalance, and a DC component of the phase voltage.

6. The method of claim 1, wherein performing the PLL operation comprises receiving a feedback of the phase angle of the phase voltage of the electric grid;
performing a transformation on the feedback and the phase voltage of the electric grid to generate a transformed value;
deriving an estimated phase voltage frequency of the electric grid based on the transformed value;
deriving an estimated phase angle of the estimated phase voltage frequency of the electric grid based on the transformed value; and
locking on the estimated phase angle.

7. A phase-locked-loop (PLL), comprising:

   circuitry configured to receive a voltage of an electric grid, determine a phase angle of the electric grid voltage, and output a voltage having the determined phase angle of the electric grid voltage; and
   a tracking filter configured to determine a frequency of a disturbance in the electric grid voltage.

8. The PLL of claim 7, wherein the PLL is configured to receive one or more imbalanced voltages of the electric grid.

9. The PLL of claim 7, wherein the circuitry comprises a transformation circuit configured to receive the electric grid voltage and the determined phase angle of the electric grid voltage.

10. The PLL of claim 7, wherein the circuitry comprises an integrator configured to determine the phase angle of the electric grid voltage based on a frequency of the electric grid voltage.

11. The PLL of claim 7, comprising more than one tracking filter, wherein each of the more than one tracking filter is configured to determine one or more of a harmonic disturbance, a DC component, or any other disturbance contributing to a voltage imbalance of the electric grid voltage.

12. The PLL of claim 7, comprising circuitry configured to remove the frequency of the disturbance from the electric grid voltage, wherein the electric grid is a three-phase electric grid, and wherein the electric grid voltage comprises three phases.

13. A phase angle generator, comprising:

   a phase-locked-loop (PLL) configured to receive an electric grid voltage, generate a phase angle of the electric grid voltage, and output the phase angle of the electric grid voltage based on the electric grid voltage; and
   a tracking filter configured to estimate a disturbance frequency in the electric grid voltage and remove the disturbance frequency.

14. The phase angle generator of claim 13, wherein the PLL is configured to receive one or more imbalanced electric grid voltages and to output a synchronized voltage to the electric grid.

15. The phase angle generator of claim 13, wherein the tracking filter is configured to estimate one or more disturbance frequencies resulting from one or more of a harmonic distortion or a DC component or a frequency of an error signal generated by the PLL based on the electric grid voltage received.

FIG. 1

FIG. 2

FIG. 3

EP 2 328 251 A2

FIG. 4A

iu, iv, iw

CURRENTS (A)

—— iu
—··—··— iv
— — — iw

t(s)

FIG. 4B

AMPLITUDE OF CURRENT (A)

—— iu
—··—··— iv
— — — iw

76 → iu
iv
iw

FREQUENCY (Hz)

EP 2 328 251 A2

FIG. 5

FIG. 6